(19) **Europäisches Patentamt**

**European Patent Office**

**Office européen des brevets**

(11) **EP 0 889 930 B1**

(12) **EUROPEAN PATENT SPECIFICATION**

(45) Date of publication and mention
of the grant of the patent:
**08.12.1999 Bulletin 1999/49**

(21) Application number: **97915571.0**

(22) Date of filing: **01.04.1997**

(51) Int Cl.6: **C08J 9/24**, C08J 3/03,
B01D 67/00, B01D 71/36,
B01D 39/16, B01D 39/08
// C08L27:18

(86) International application number:
**PCT/GB97/00921**

(87) International publication number:
**WO 97/36954 (09.10.1997 Gazette 1997/43)**

(54) **GRANULAR-TYPE POLYTETRAFLUOROETHYLENE DISPERSIONS AND FUSED ARTICLES PREPARED THEREFROM**

KÖRNIGE POLYTETRAFLUOROETHYLEN DISPERSIONEN UND DARAUS HERGESTELLTE GESCHMOLZENE ARTIKEL

DISPERSIONS EN POLYTETRAFLUOROETHYLENE DE TYPE GRANULAIRE ET ARTICLES FONDUS PRODUITS A PARTIR DE CELLES-CI

(84) Designated Contracting States:
**DE FR GB IT SE**

(30) Priority: **30.03.1996 GB 9606819**

(43) Date of publication of application:
**13.01.1999 Bulletin 1999/02**

(73) Proprietor: **W.L. GORE & ASSOCIATES (UK) LTD London WC2A 2JP (GB)**

(72) Inventor: **CLOUGH, Norman, Ernest Biggar, Lanarkshire ML12 6ER (GB)**

(74) Representative: **Horner, Martin Grenville et al Cruikshank & Fairweather 19 Royal Exchange Square Glasgow G1 3AE Scotland (GB)**

(56) References cited:
**EP-A- 0 369 466     EP-A- 0 450 894**

• **DATABASE WPI Section Ch, Derwent Publications Ltd., London, GB; Class A88, AN 73-66422U XP002035648 & JP 48 056 580 A (YUASA BATTERY CO LTD)**

**Description**

This invention relates to porous polytetrafluoroethylene (PTFE hereinafter) materials formed by fusion of granular-type PTFE resin particles thus creating a loose or open interconnection of fused particles.

Porous PTFE articles have been produced by fusing PTFE resin particles together through application of heat at a temperature above the melt (or sinter) temperature of the PTFE.

For example, GB 2 242 431 B to Allan, et al. (W. L. Gore & Associates, Ltd.), describes a sintered porous PTFE structure used as a filter to filter solids or gases from liquids. The porous structures are formed by fusing together particles of granular-type PTFE to form an integral network of void spaces between the particles. The pores are created by the void space between the particles and results in tortuous paths of voids through the article. Because of the small pore size and the chemical inertness of the PTFE, these structures are useful as filters, fuel cell electrodes, photocopy webs or rolls, and the like. However, these structures tend to have weak inter-particle connections and are not as strong as needed for some applications.

U.S. Patent 5,154,866 to Honda (Daikin), describes preparation of porous PTFE articles of sintered granular PTFE and fine powder PTFE used as filters for filtering out small particulate. The preparation comprises the steps of first gelling a PTFE powder prepared by suspension polymerization (which to one skilled in the art identifies the PTFE as granular-type PTFE) at a temperature not lower than the melting point of PTFE. Next the PTFE is pulverized and mixed with an aqueous dispersion of PTFE fine powder prepared by emulsion polymerization. The solids are then coagulated, ram extruded, and baked by heating above the melting point of the PTFE. The gelled PTFE particles are hard and resist compaction. This results in relatively large size pores and the articles are useful mostly for separating out relatively large size particulate.

U.S. Patent 3,855,191 to Doughty, et al. (DuPont Co.) describes a modified granular-type PTFE in which the modification is in use of a modifier monomer which enters into the polymer chain to modify the homopolymer structure without changing the well known nonmelt processible characteristics of the polymer.

In this invention, strong porous PTFE articles are obtained that are useful as filters in filtration or in the metered dispensing of liquids, as for example in photocopying and in photocopier rolls or webs and in fuel cell electrodes.

The novel porous PTFE articles of the invention are generally prepared from a novel aqueous dispersion of the invention, in which particles of at least one non-melt-processible granular-type PTFE homopolymer are present in the dispersion along with a small amount of particles of a melt-flowable (or melt-processible) fluorinated polymer. Usually, a coating of the aqueous dispersion is layed down on a substrate, followed by heating to drive off the aqueous liquid and other volatiles, and to fuse together the particles into an open network of fused particles that define a tortuous network of interconnected voids through the article between the fused interconnected particles. Thus, the porosity is not due to stretching or expanding of PTFE as is the case in some unrelated PTFEs. On the contrary the particles are non-expanded.

Thus, the product aspect of the invention is twofold. In one aspect, the product is the fused porous sheet of particles which form a network of fused interconnected particles. In the other aspect the product is the aqueous dispersion from which the fused porous sheet is prepared.

It has surprisingly been found that when small amounts of the melt-flowable fluorinated polymer particles are added to the granular-type PTFE in the aqueous dispersions, the resulting fused sheets are stronger than when no melt-flowable fluorinated polymer is present.

Other aspects and variants of the invention will become evident in the ensuing discussion.

By the term, "granular-type PTFE", is meant that type of PTFE resin that is produced by the suspension polymerisation technique. This technique produces a molding resin that can be ram extruded. The term "granular" is a term of art in the PTFE field and refers to the method by which the polymer is made. It has no relationship to particle size.

By the term "melt-flowable" is meant that the polymer has a sufficiently low melting point and melt viscosity that it can be processed into various articles using conventional melt processing techniques used for thermoplastics.

The non-melt-flowable granular-type PTFE particles, which can be sintered or unsintered particles, or a mixture of both, are admixed with the melt-flowable fluorinated polymer particles. Preferred such particles are a thermoplastic tetrafluoroethylene copolymer present in an amount of between 1 and 30% by weight of solids, preferably 3-20%.

Examples of the thermoplastic fluorinated tetrafluoroethylene polymers include copolymers of tetrafluoroethylene and hexafluoropropylene (commonly called fluorinated ethylene-propylene copolymer or FEP), and of tetrafluoroethylene and perfluoroalkyl vinyl ether (when the ether is perfluoropropyl vinyl ether the copolymer is commonly called PFA). These fully fluorinated polymers are preferred.

The greater strength in the resulting fused products that contain the melt-flowable fluorinated polymer over those products that do not contain the fluorinated polymer is surprising.

The aqueous dispersion described above can be used to form a coating or a web which can then be baked to obtain the novel fused composition. The particles of PTFE and fluorinated polymer when fused together at certain contact points provide an integral network of interconnected particles which define a tortuous network of interconnected voids through the compositions.

The several types of PTFE used herein are available from several sources, such as the DuPont Co., Hoechst, and Daikin. As is well known, PTFE is produced by at least two distinct procedures which result in two distinct products which have acquired recognition in the art as being two distinct classes of chemicals. In one process, little or no dispersing agent is employed and vigorous agitation is used to produce a coagulated resin that has acquired the designation "granular PTFE resin" in the art. In the second procedure, a fluorinated surfactant is employed and agitation is very mild, producing small spherical particles dispersed in the aqueous medium. In the latter process, coagulation of the dispersion is avoided until after polymerization is completed. This type has acquired the designation "fine powder" dispersion in the art. Subsequent precipitation of the particles produces fine powder resins which are converted to finished products by paste extrusion.

The granular PTFE resins used herein consist of stringy, irregularly shaped particles, which can exceed a millimeter in size. The "as-polymerized" granular polymer cannot be used as such, but must be cut to uniform particle size to provide sinterability. Shaped products are made only by ram extrusion of the resin. In contrast, the fine powder resins are produced by polymerizing TFE in the presence of a dispersing agent and thus the process resembles emulsion polymerization. The polymer is highly crystalline. The average particle size in dispersion is about $0.2\,\mu m$. The fine powder resins cannot be ram extruded, but instead can only be paste extruded by first mixing them with a lubricant.

When the granular PTFE resin and the melt-flowable fluorinated resin are dispersed in an aqueous dispersion, the dispersion can be sprayed or cast onto a surface to form a coating. After removal of the water and other volatiles by drying, and after heating to sinter or fuse the particles, the fused (or sintered) product of the invention is obtained.

The coating formed is ordinarily about 50-2000 micrometers thick, but usually is 150-1500 micrometers.

One or more grades of granular PTFE may be employed. The granular PTFE can be mixed with modified granular PTFE where the modifiying comonomer is, for example, hexafluoropropylene and another polymer in which the modifying monomer is, for example, perfluoropropyl vinyl ether in any desired amounts. The granular can also be either unsintered or presintered or a mixture of both as added to the aqueous dispersion. Use of unsintered resin tends to produce stronger fused products since the unsintered particles are soft and tend to pack to form a strong porous web having small pore sizes when sintered.

On the other hand, if the starting granular PTFE is presintered, the particles are harder and less compactible. When fused, the interparticle connection is less strong and larger pores are formed.

Modified Granular PTFE copolymer is comercially unavailable - its sintered form. Where sintered modified copolymer is required this may be produced by subjectly the sintered modified copolymer particles to a preliminary sintering step, and if necessary breaking down the sintered particles of the required size again.

When mixtures of sintered and unsintered granulars are used, it is believed that the softer, unsintered particles form fibrillar rod-like moieties which link the harder sintered particles to provide increased inter-particle connection strengths.

The resin particles of granular PTFE in aqueous dispersion should have an average particle size in the range of 1-600 micrometers, and preferably 10-300 micrometers.

Particles of an organic or inorganic filler materials may also be included in the aqueous dispersion. Examples of fillers include carbon, activated carbon, glass, chromium oxide, titanium oxide, chopped expanded PTFE, silica dioxide, PEEK, polyimide and the like. A large variety of fillers can be employed to add specific properties to the final fused composition. The amount of filler can be as high as 60% or more based on weight of composition, but ordinarily is less than 50%, and preferably less than 40%.

The granular resin or mixtures of resins, is dispersed in water, along with the melt-flowable fluorinated polymer in the presence of any suitable surfactant, thickening agent. Amount of granular resin present can vary over a wide range. Preferably 30-70 weight percent resin solids will be present. The amount of melt-flowable fluorinated polymer in the dispersion will usually exceed 1% and may be between 3% and 30% by weight of solid and preferably between 5% and 20%. The aqueous dispersion is then coated on a substrate, such as by spraying, dipping, or casting. The substrate can be a release type substrate from which the subsequently baked or sintered product is peeled away to obtain a self-supporting film or membrane. The substrate can be a supporting mesh that forms an integral part with the sintered product.

The liquid-wet coating is then dried and baked at elevated temperatures. A preliminary step may involve heating somewhat slowly to 100°C in order to drive off water and any other volatiles, and holding at that temperature for a short period of time. Thereafter, the temperature is ordinarily raised progressively up to 330 to 385°C (e.g. 340 to 370°C) in order to allow sintering and fusion of the granular and melt-flowable fluorinated polymer particles.

One particular embodiment of the present invention employs unsintered granular PTFE material; however mixtures of sintered and unsintered granular PTFE may also be used in other embodiments. Teflon® granular-type PTFE resin grades 7A (unsintered) and 9B (sintered) are available from E. I. DuPont de Nemours & Co., Inc., Specialty Polymers Division, Wilmington, Delaware, U.S.A. In one preferred embodiment, the fused non-expanded porous PTFE of the invention may be produced from 0-100% unsintered PTFE (e.g. grade 7A) and conversely 100-0% sintered PTFE (e.g. grade 9B). Where the sintered porous PTFE is formed from a mixture of sintered and unsintered granular-type PTFE particles, it is preferred that the unsintered PTFE predominate since this leads to a material having good strength. The inclusion of sintered PTFE particles tends to increase the porosity of the sintered porous PTFE layer produced.

The unsintered granular-type 7A PTFE will ordinarily have a particle size of between 1 and 300 microns and preferably between 20 and 150 microns (mean size of about 35 microns). One commercial grade unsintered unmodified granular-type resin is available from the DuPont Company as Teflon 7A as mentioned above. Another grade, having elongated fibrous particles, is available from DuPont with the tradename Teflon 7C.

Unsintered granular PTFE tends to be made of soft particles which can "pack" together to form a fairly strong web when sintered having relatively small pore sizes. For example, Teflon 7A has a tensile strength of 471·4 N/cm$^2$ and a mean pore size of 2.01 micron, when fused into a network.

On the other hand, sintered granular PTFE is composed of hard, substantially noncompactable particles. When baked above the melt temperature, only a weak inter-particle connection is obtained and leads to large pore sizes. For example, sintered granular-type PTFE is available from the DuPont company under the tradename Teflon 9B. It has a specific strength of 79N/cm$^2$ and a mean pore size of 6.04 micron when ground particles of 40 micron volume average particle size are fused into a network.

Prior to use, the PTFE grade 9B can be milled to a volume average particle size of about 40 microns by grinding an aqueous slurry thereof between grinding stones at room temperature as follows. The PTFE grade 9B can be mixed with water to form a slurry, and the slurry fed between closely spaced grinding surfaces of a grinding mill as disclosed in U.S. Patent 4,841,623, to crush and shear the pieces of PTFE into particles. The ground slurry is then filtered or centrifuged to separate the granular PTFE particles from water, and the separated finely ground particles oven dried at from 125°C - 150°C.

Melt-flowable fluorinated polymer, e.g., FEP or PFA, are available from a number of sources, e.g. the DuPont Company, Hoechst or Daikin.

Where the sintered non-expanded porous PTFE is formed of a mixture of sintered granular-type particles, together with a "softer" unsintered granular-type PTFE, it is believed that the softer material forms rod-like moieties which link the harder sintered particles to provide increased inter-particle connection strengths. Non-expanded PTFE formed solely of hard pre-sintered granular-type PTFE particles tends to have relatively poor strength.

The films and webs so obtained can be used for a variety of purposes. They can be used as webs or rollers for oil supply or as wipers in photocopy equipment, due to the good supply and rate control provided by the small size of the pores of the material. They can be used to filter out particulate; or, when containing absorptive fillers, to filter out gases in gaseous mixtures. Because the material is made of PTFE, it has the good chemical inertness, abrasive resistance and heat degradation resistance associated with ordinary PTFE structures.

## Test Procedures

### Gurley Number

[0037] The degree of air flow through the test sample is determined by the Gurley test. In this test, the number of seconds required for 100 cc of air to pass through one square inch of material under a pressure drop of 4.88 inches of water is measured.

### Density

Unless otherwise stated, the density of the PTFE is determined by weighing a sample thereof in two different media, viz; air and water at room temperature. Water is a non-wetting medium for PTFE and consequently, the resulting density measurements refer to the porous PTFE. The weights were determined using an Avery VA124 analytical balance. The porous PTFE density is calculated as shown below:

$$\frac{(\text{Weight in Air}) (\text{Density of Water at Room Temperature})}{(\text{Weight in Air - Weight in Water})}$$

### Porosity

% Porosity is determined from density measurements in wetting and non-wetting mediums i.e. isopropyl alcohol (IPA) and water respectively, as shown below:

$$\% \text{ Porosity} = \frac{(\text{Density in IPA - Density in Water})}{(\text{Density in IPA})} \times 100$$

Particle Size

Particle size of the PTFE resins used was determined as follows: using a magnetic stirrer and ultrasonic agitation, 2.5 grams of PTFE powder were dispersed in 60 ml isopropyl alcohol. (Ultrasonic Probe Model W-385, manufactured by Heat Systems-Ultrasonics, Inc.).

Aliquots of 4-6 ml of the dispersed particles were added to approximately 250 ml of circulating isopropyl alcohol in a Leeds & Northrup Microtrac FRA Particle Size Analyzer. Each analysis consisted of three 30-second runs at a sample circulation rate of 2 liters/minute during which light scattering by the dispersed particles is automatically measured and the particle size distribution automatically calculated from the measurements.

Pore Size Measurements (Coulter Porometer).

The pore size of the materials is determined by a Coulter Porometer II which uses a liquid displacement technique. The sample is thoroughly wetted with a liquid of low surface tension and low vapor pressure e.g., Coulter Porofil, such that all the pores have been filled with the liquid. The wetted sample is subjected to increasing pressure, applied by a gas source. As the pressure is increased, the surface tension of the liquid is finally overcome and the liquid is forced out of the pores. By monitoring the gas pressure applied to the sample and the flow of gas through the sample when liquid is expelled, a "wet" run is obtained. The sample is then tested "dry" without liquid in the pores and a "dry" run is obtained. By comparing both "wet" and "dry" runs, the maximum (also called the bubble point), minimum and mean pore size can be calculated by the porometer using the Washburn equation shown below:

$$Pr = 2 \gamma \cos \theta$$

wherein:

P = Gas pressure
r = Capillary (or pore) radius
$\gamma$ = Surface tension of wetting liquid
$\theta$ = Contact angle between wetting liquid and pore surface

Tensile Strength

Tensile measurements were carried out according to ASTM D461-87 Part 12 using an Instron 1011 Tensile Test Machine fitted with a 5KN load cell.

**EXAMPLE 1**

Porous PTFE Structures using a blend of granular (7A unsintered) and PFA Resins

The following proportions (% volume) of liquid formulations were blended together for 2 minutes using a Silverson mixing head:

20.9% Carboxymethyl cellulose solution
74.5% Water
3.6% Zonyl FSN-100 surfactant solution
1.0% Triethanolamine

This mixture is known as the "surfactant concentrate." The carboxymethyl cellulose solution was prepared by dissolving carboxymethyl cellulose (which acts as a thickening agent) in water at a 1% (by weight) concentration. The FSN-100 surfactant is a non-ionic perfluoroalkyl ethoxylate mixture. The FSN-100 surfactant solution consisted of a mixture of four parts FSN-100, three parts water and three parts isopropyl alcohol (by weight).

90 g of DuPont PFA (copolymer of TFE and PPVE) 900 g of "surfactant concentrate" and 18 g of vegetable dye were blended together for 60 seconds using a Waring blender to form a suspension. The dye is used as a visual aid to determine surface finish. 810 g of DuPont granular PTFE resin 7A with an average particle size of 35 microns was then added to the suspension which was reblended for 60 seconds. The resulting aqueous suspension was suitable for spray application. The suspension was sprayed onto a 304L stainless steel mesh (Plain Hollander weave, 50 mesh per inch warp, 250 mesh per inch weft, warp wire diameter 0.140 mm, weft wire diameter 0.112 mm, nominal micron rating 60) using a Binks BBR gun. The spray coated mesh was dried in an oven at 65°C for 1 hour. The temperature was then increased for up to 3 hours up to 350-370°C and held at this temperature for up to three hours to complete the baking process. After cooling, the resulting film was peeled away from the stainless steel mesh.

Test results of the sample and of a sample in which DuPont PFA fluoropolymer was not present are as follows:

| Blend (% weight) | Tensile Strength (N/cm$^2$) | Density (g/cm$^3$) | Porosit y (%) | Mean Pore (micron) |
|---|---|---|---|---|
| 100% 7A | 499.2 | 1.245 | 44.6 | 1.984 |
| 90% 7A:10%PFA | 605.5 | 1.253 | 41.5 | 1.687 |

## EXAMPLE 2

### Porous PTFE Structures using a blend of granular (9B sintered) and FEP Resins

The following proportions (% volume) of liquid formulations were blended together for 2 minutes using a Silverson mixing head:

    20.9% Carboxymethyl cellulose solution
    62.9% Water
    7.2% Zonyl FSN-100 surfactant solution
    9.0% Pluronic L121 surfactant

This mixture is known as the "surfactant concentrate." The carboxymethyl cellulose solution was prepared by dissolving carboxymethyl cellulose (which acts as a thickening agent) in water at a 1% (by weight) concentration. Plutronic (trademark) L121 surfactant is a polyoxyethylene/polyoxypropylene block copolymer. The FSN-100 surfactant is a non-ionic perfluoroalkyl ethoxylate mixture. The FSN-100 surfactant solution consisted of a mixture of four parts FSN-100, three parts water and three parts isopropyl alcohol (by weight).

89 g of DuPont FEP (copolymer of TFE and HFP) 950 g of "surfactant concentrate" and 16 g of food coloring dye are blended together for 60 seconds using a Waring blender to form a suspension. The dye is present as a visual aid in determining the surface finish of the spray coat. 800 g of DuPont presintered granular PTFE resin - 9B which has been milled to an average particle size of 55 microns was added to the suspension and reblended for a further 60 seconds. The resulting aqueous suspension was suitable for spray application. The suspension was sprayed onto a 304L stainless steel mesh (Plain Hollander weave, 50 mesh per inch warp, 250 mesh per inch weft, warp wire diameter 0.140 mm, weft wire diameter 0.112 mm, nominal micron rating 60) using a Binks BBR gun. The spray coated mesh was dried in an oven at 65°C for 1 hour. The temperature was then increased over several hours, up to 350 - 370°C and held at this temperature for up to three hours to complete the baking process. After cooling, the resulting film can be peeled away from the stainless steel mesh.

The physical properties of this material are compared with those obtained using only sintered PTFE resin - 9B i.e., no DuPont FEP fluoropolymer was present, are as follows:

| Blend (% weight) | Tensile Strength (N/cm$^2$) | Density (g/cm$^3$) | Porosity (%) | Mean Pore (microns) |
|---|---|---|---|---|
| 100% 9B | 102.9 | 0.870 | 61.0 | 4.375 |
| 90% 9B:10% FEP | 200.0 | 0.964 | 55.3 | 5.781 |

## Claims

1.   A porous material formed of particles of a non-melt-processible granular PTFE and particles of a melt-flowable fluorinated polymer, wherein the particles are fused together to form a network of fused particles in which the network defines a tortuous path of interconnected voids between the fused interconnected particles.

2.   The material of Claim 1 in the form of a sheet.

3.   The material of Claim 1 or 2 wherein the fluorinated polymer is a copolymer.

4. The material of Claim 3 wherein the copolymer is a copolymer of tetrafluoroethylene and another fluorinated monomer.

5. The material of Claim 4 wherein the other fluorinated monomer is hexafluoropropylene or perfluoropropyl vinyl ether.

6. The material of Claim 1 wherein the ratio of particles present is 70-99 weight % granular PTFE and 30-1 weight % melt-flowable fluorinated polymer.

7. The material of any preceding claim wherein the granular PTFE particles include modified granular PTFE particles which comprise a modifying comonomer

8. An aqueous dispersion of particles of a non-melt-processible granular PTFE and particles of a melt-flowable fluorinated polymer, wherein the ratio of particles is 70-99 weight % granular PTFE and 30-1 weight % fluorinated polymer.

9. The dispersion of Claim 8 wherein the fluorinated polymer is a copolymer.

10. The dispersion of Claim 9 wherein the copolymer is a copolymer of tetrafluoroalkylene and another fluorinated monomer.

11. The dispersion of Claim 10 wherein the other fluorinated monomer is hexafluoropropylene or perfluoropropyl vinyl ether.

12. The dispersion of Claim 8 wherein the particles of non-melt-processible granular PTFE consist essentially of a mixture of sintered and unsintered particles.

13. Process for forming a porous PTFE material which comprises:

(a) forming an aqueous dispersion of particles of a non-melt-processible granular PTFE and particles of a melt-flowable fluorinated polymer;
(b) forming said dispersion into a coating on a substrate;
(c) drying the coating; and
(d) heating the coating to fuse together the particles to form a network of fused particles in which the network defines a tortuous path of interconnected voids between the fused interconnected particles.

**Patentansprüche**

1. Ein poröses Material, das aus Teilchen aus einem nicht-schmelzverarbeitbaren, körnigen PTFE und aus Teilchen aus einem schmelzfließfähigen, fluorierten Polymer gebildet ist, wobei die Teilchen zusammengeschmolzen sind, um ein Netzwerk aus geschmolzenen Teilchen zu bilden, in welchem das Netzwerk einen gewundenen bzw. verschlungenen Weg von untereinander verbundenen Hohlräumen zwischen den geschmolzenen, untereinander verbundenen Teilchen definiert.

2. Das Material nach Anspruch 1 in der Gestalt einer Folie.

3. Das Material nach Anspruch 1 oder 2, bei welchem das fluorierte Polymer ein Copolymer ist.

4. Das Material nach Anspruch 3, bei welchem das Copolymer ein Copolymer aus Tetrafluorethylen und einem anderen fluorierten Monomer ist.

5. Das Material nach Anspruch 4, bei welchem das andere fluorierte Monomer Hexafluorpropylen oder Perfluorpropylvinylether ist.

6. Das Material nach Anspruch 1, bei welchem das Verhältnis der vorhandenen Teilchen 70-99 Gew.-% körniges PTFE und 30-1 Gew.-% schmelzfließfähiges, fluoriertes Polymer ist.

**7.** Das Material nach einem der vorhergehenden Ansprüche, bei welchem die Teilchen aus körnigem PTFE Teilchen aus modifiziertem, körnigen PTFE aufweisen, welche ein modifizierendes Comonomer aufweisen.

**8.** Eine wässrige Dispersion aus Teilchen aus einem nicht-schmelzverarbeitbaren, körnigen PTFE und aus Teilchen aus einem schmelzfließfähigen, fluorierten Polymer, bei welcher das Verhältnis der Teilchen 70-99 Gew.-% körniges PTFE und 30-1 Gew.-% fluoriertes Polymer ist.

**9.** Die Dispersion nach Anspruch 8, bei welcher das fluorierte Polymer ein Copolymer ist.

**10.** Die Dispersion nach Anspruch 9, bei welcher das Copolymer ein Copolymer aus Tetrafluoralken und einem anderen fluorierten Monomer ist.

**11.** Die Dispersion nach Anspruch 10, bei welcher das andere fluorierte Monomer Hexafluorpropylen oder Perfluorpropylvinylether ist.

**12.** Die Dispersion nach Anspruch 8, bei welcher die Teilchen aus nicht schmelzverarbeitbarem, körnigen PTFE im wesentlichen aus einer Mischung aus gesinterten und ungesinterten Teilchen bestehen.

**13.** Verfahren zur Bildung eines porösen PTFE-Materials, wobei das Verfahren aufweist:

(a) Bilden einer wässrigen Dispersion aus Teilchen aus einem nicht schmelzverarbeitbaren, körnigen PTFE und aus Teilchen aus einem schmelzfließfähigen, fluorierten Polymer;

(b) Formen der genannten Dispersion in eine Beschichtung auf einem Substrat;

(c) Trocknen der Beschichtung; und

(d) Erwärmen der Beschichtung, um die Teilchen zusammenzuschmelzen, um ein Netzwerk aus geschmolzenen Teilchen zu bilden, in welchem das Netzwerk einen gewundenen bzw. verschlungenen Weg von untereinander verbundenen Hohlräumen zwischen den geschmolzenen, untereinander verbundenen Teilchen definiert.

**Revendications**

**1.** Matériau poreux formé de particules d'un PTFE granulaire non fusible et d'un polymère fluoré fusible, dans lequel les particules sont fusionnées pour former un réseau de particules fusionnées dans lequel le réseau décrit un chemin tortueux de vides interconnectés entre les particules fusionnées interconnectées.

**2.** Matériau de la revendication 1 sous la forme d'une feuille.

**3.** Matériau de la revendication 1 ou 2 dans lequel le polymère fluoré est un copolymère.

**4.** Matériau de la revendication 3 dans lequel le copolymère est un copolymère de tétrafluoroéthylène et d'un autre monomère fluoré.

**5.** Matériau de la revendication 4 dans lequel l'autre monomère fluoré est de l'hexafluoropropylène ou l'éther de vinyle de perfluoropropyle.

**6.** Matériau de la revendication 1 dans lequel le taux de particules présentes est de 70 à 99% en masse de PTFE granulaire et de 30 à 1% en masse de polymère fluoré fusible.

**7.** Matériau de l'une quelconque des revendications précédentes dans lequel les particules de PTFE granulaire comprennent des particules de PTFE granulaire modifié comprenant un comonomère modifiant.

**8.** Dispersion aqueuse de particules d'un PTFE granulaire non fusible et de particules d'un polymère fluoré fusible, dans laquelle le taux de particules est de 70 à 99% en masse de PTFE granulaire et de 30 à 1% en masse de polymère fluoré.

**9.** Dispersion de la revendication 8 dans laquelle le polymère fluoré est un copolymère.

**10.** Dispersion de la revendication 9 dans laquelle le copolymère est un copolymère de tétrafluoroalkylène et d'un autre monomère fluoré.

**11.** Dispersion de la revendication 10 dans laquelle l'autre monomère fluoré est l'hexa-fluoropropylène ou l'éther de vinyle de perfluoropropyle.

**12.** Dispersion de la revendication 8 dans laquelle les particules de PTFE granulaire non fusible sont essentiellement constituées d'un mélange de particules sintérisées et non sintérisées.

**13.** Procédé de préparation d'un matériau poreux de PTFE qui comprend :

(a) la préparation d'une dispersion aqueuse de particules d'un PTFE granulaire non fusible et de particules d'un polymère fluoré fusible ;
(b) la préparation de ladite dispersion sous forme d'une couche sur un substrat ;
(c) le séchage de la couche ; et
(d) le chauffage de la couche pour fusionner les particules afin de former un réseau de particules dans lequel le réseau décrit un chemin tortueux de vides interconnectés entre les particules fusionnées interconnectées.